# EUROPÄISCHE PATENTSCHRIFT

(11) **EP 1 991 762 B1**
(45) Veröffentlichungstag und Bekanntmachung des Hinweises auf die Patenterteilung: **11.03.2015**
(21) Anmeldenummer: 07704268.7
(22) Anmeldetag: 31.01.2007
(51) Int. Cl.: F16J 15/08, F01D 11/00

(54) **GASTURBINE MIT RINGFÖRMIGEM HITZESCHILD UND ABGEWINKELTEN DICHTUNGSSTREIFEN**
GAS TURBINE WITH ANNULAR HEAT SHIELD AND ANGLED SEALING STRIPS
TURBINE A GAZ AVEC ECRAN THERMIQUE ET BANDES D'ETANCHEITE COUDEES

(30) Priorität: 06.03.2006 CH 3502006
(43) Veröffentlichungstag der Anmeldung: 19.11.2008
(73) Patentinhaber: ALSTOM Technology Ltd, 5400 Baden (CH)
(72) Erfinder: MARX, Peter, CH-5413 Birmenstorf (CH); WISE, James, Robert, Wellington, Florida 33414 (US); KOENIG, Marcel, CH-5430 Wettingen (CH)
(86) Internationale Anmeldenummer: PCT/EP2007/050944
(87) Internationale Veröffentlichungsnummer: WO 2007/101757

(56) Entgegenhaltungen:
- EP-A- 1 074 695
- EP-A2- 1 167 691
- EP-A2- 1 378 689
- WO-A-2004/074640
- US-A- 4 108 571
- US-A- 4 749 333
- US-A- 5 154 577
- US-A- 5 738 490
- US-A- 5 868 398
- US-B1- 6 332 617

## Beschreibung

### TECHNISCHES GEBIET

Die vorliegende Erfindung bezieht sich auf das Gebiet der Technik von Gasturbinen. Sie betrifft eine Gasturbine gemäss dem Oberbegriff des Anspruchs 1.

### STAND DER TECHNIK

Federdichtungen bzw. Streifendichtungen zwischen benachbarten Segmenten im Heissgaskanal sind in Gasturbinen seit langem bekannt (US-A-3,752,598).

Es ist weiterhin bekannt, bei sich kreuzenden Dichtungen zwischen den Segmenten separate abgewinkelte Übergangsdichtungen zur Abdichtung der Kreuzungspunkte vorzusehen (US-A-5,154,577).

Schliesslich ist aus der US-A-5,655,876 (Fig. 4, 5) eine Streifendichtung für Segmente bekannt, die aus einer am Ende offenen Nut austritt und dort abgewinkelt ist, um die Position der Dichtung zu fixieren.

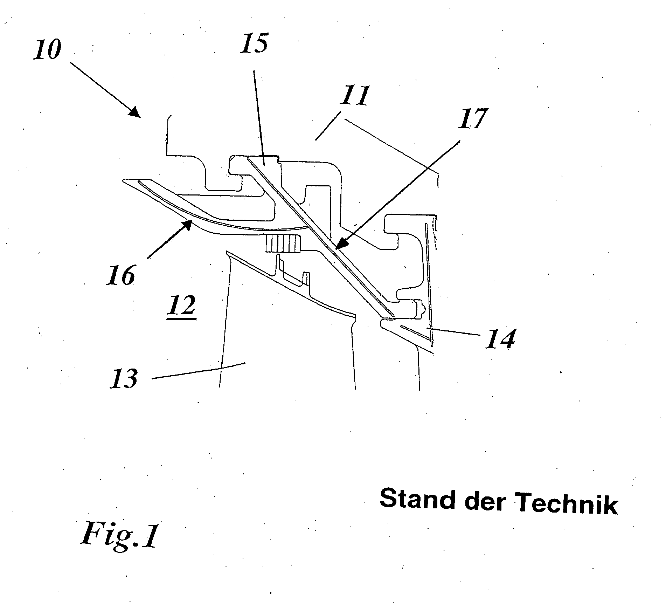

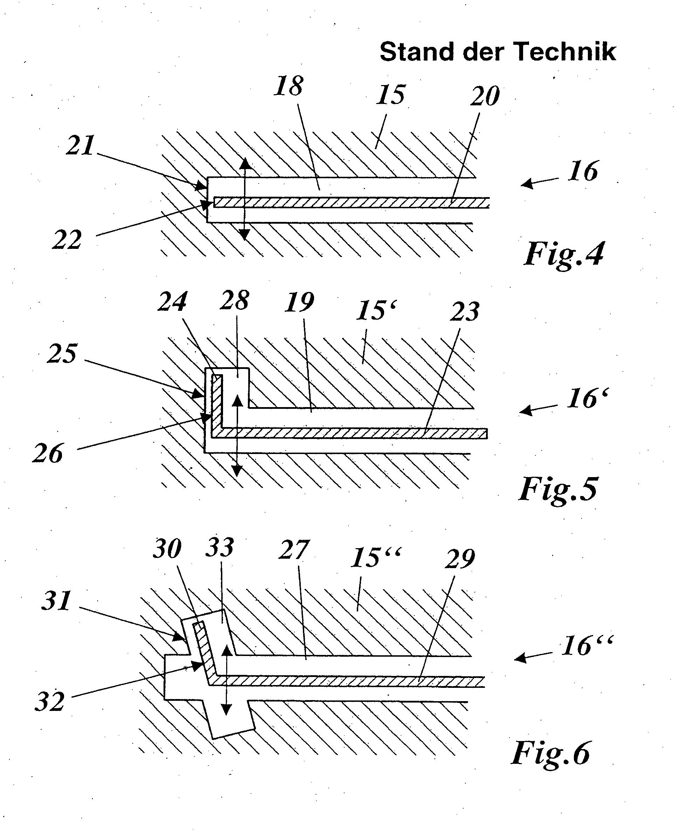

Bereits im Einsatz befindliche Gasturbinen, wie z. B. die Gasturbinen vom Typ GT24/26 der Anmelderin, haben einen internen Aufbau, wie er in Fig. 1, 2 und 4 ausschnittweise dargestellt ist. Die Gasturbine 10 hat einen (nicht dargestellten) Rotor mit einer Mehrzahl von Laufschaufeln 13, der unter Bildung eines Heissgaskanals 12 von einem Stator 11 konzentrisch umgeben ist. Am Stator 11, insbesondere der Trägerstruktur, sind Leitschaufeln 14 befestigt. Zwischen den Leitschaufeln aufeinanderfolgender Stufen ist der Stator 11 gegenüber dem Heissgaskanal 12 durch einen ringförmigen, in Umfangsrichtung segmentierten Hitzeschild 15 abgeschirmt (siehe dazu beispielsweise die DE-A1-103 42 208). Zwischen benachbarten Segmenten des Hitzeschildes 15 bleibt ein Spalt frei, der durch im Spalt angeordnete Dichtungen 16 und 17 abgedichtet wird. Die Dichtungen 16, 17 sind als sogenannte Federdichtungen oder Streifendichtungen ausgebildet und umfassen jeweils dünne, längliche Dichtungsstreifen (20 in Fig. 4), die in zueinander korrespondierenden, quer zur Längsrichtung durch eine Stirnwand 21 begrenzten Dichtungsnuten 18 in den gegenüberliegenden Stirnseiten der aneinanderstossenden Segmente des Hitzeschildes 15 untergebracht sind.

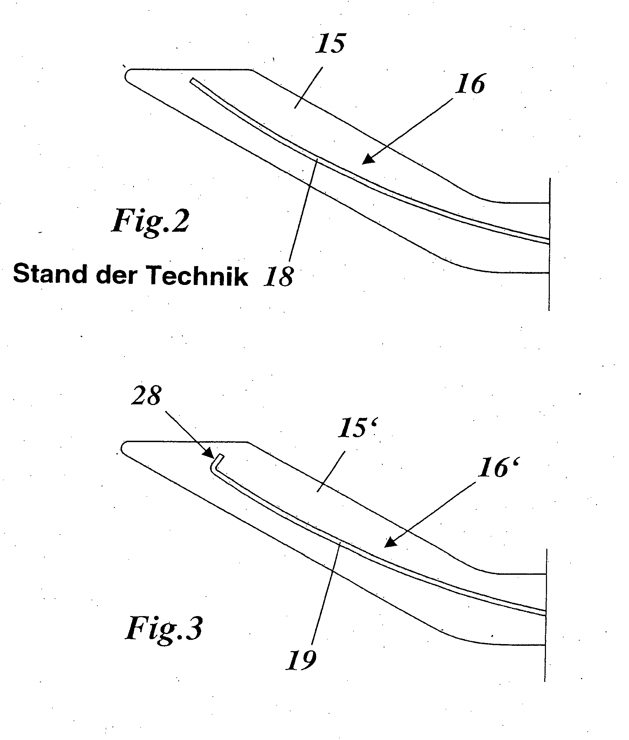

Die Dichtung 17 verhindert das Einströmen von Kühlluft durch die Spalte zwischen den Segmenten in den Heissgaskanal 12. Die Dichtung 16 verhindert umgekehrt das Ausströmen von heissen Gasen aus dem Heissgaskanal 12 durch die Spalte zwischen den Segmenten. Der Druckabfall über der Dichtung 16 ist gering. Daher liegt der zugehörige Dichtungsstreifen 20 lose in den entsprechenden Dichtungsnuten 18 der aneinanderstossenden Segmente (Fig. 2, 4). Während des Betriebes kann es so zu Vibrationen des Dichtungsstreifens 20 in den Dichtungsnuten 18 kommen.

Wenn der Dichtungsstreifen 20 in den Dichtungsnuten 18 vibriert (siehe Doppelpfeil in Fig. 4, welcher die prinzipielle Vibrationsrichtung darstellt), schabt das scharfe Ende des Streifens (Stirnfläche 22 in Fig. 4) an der Stirnwand 21 der Dichtungsnut 18 und durchstösst schliesslich die Wand. Metallurgische Veränderungen, welche auf Oxidation zurückzuführen sind, erhöhen die Härte der Dichtungsstreifen 20 und können das Durchreiben der Wand noch beschleunigen. Wenn der Dichtungsstreifen 20 die Wand des Hitzeschildes vollständig durch gescheuert hat, gibt es nichts mehr, was den Dichtungsstreifen 20 in der Dichtungsnut 18 hält. Der Dichtungsstreifen 20 tritt aus der Nut aus und in den Heissgaskanal 12 ein. Dieses Ereignis ist aus zwei Gründen gefährlich: Zum einen kann der lose Dichtungsstreifen im Heissgaskanal an den stromabwärts liegenden Komponenten einen nicht vorhersehbaren Schaden anrichten. Zum anderen fehlt die Dichtung zwischen den Segmenten des Hitzeschildes, so dass Heissgas zwischen den Segmenten austreten und die dahinterliegende Struktur beschädigen kann oder der Kühlluftverbrauch wird erhöht und dadurch die Gasturbinenleistung verringert.

Die Druckschrift WO-A1-2004/074640 zeigt in Fig. 8b und 8c eine Dichtungsstreifen-Geometrie, bei welcher der längliche Dichtungsstreifen an beiden Stirnseiten um 90° umgebogen ist. Bei einer solchen Geometrie kann - selbst wenn die angrenzenden Nutwände durchgescheuert würden - der Dichtungsstreifen a priori nicht aus der Nut nach aussen austreten.

Die Druckschrift US-B1-6,332,617 offenbart aus miteinander verschränkten Teilstreifen 22 zusammengesetzte Dichtungen, die mit abgekröpften Längsseiten 19 in dafür vorgesehenen Umfangsnuten 20 eingreifen (Fig. 3). Aufgrund der gegenseitigen Verschränkung sind die Teilstreifen von vornherein gegen ein Heraustreten gesichert.

Die Druckschrift US-A-5,868,398 zeigt eine zusammengesetzte Dichtung, die aus einem zentralen Teil 54 und einem oder zwei kurzen Endabschnitten 56 besteht. Die Endabschnitte 56 haben jeweils ein Verbindungselement 72 und ein radiales Element 74 und sind relativ zum zentralen Teil 54 verschiebbar. Der radiale Teil 74 der Endabschnitte 56 folgt lediglich der U-Form der Leitschaufelsegmente 20 (siehe Fig. 2). Ein Durchreibproblem liegt hier wegen des zusammengesetzten Aufbaus der Dichtung nicht vor.

Die Druckschrift US-A-4,749,333 offenbart eine Dichtungsanordnung, bei der eine gerade, streifenförmige, dünne Federdichtung 102 mit einem L-förmig gebogenen Halter 100 flächig verbunden ist, um eine ursprünglich einfache L-förmige Dichtung 10 zu ersetzen. Die durch einen Klebstoff vermittelte flächige Verbindung löst sich im Betrieb auf, so dass die Federdichtung 102 als separates Bauteil ohne vergrösserte Fläche an den Stirnseiten wirkt.

Die Druckschrift US-A-5,738,490 zeigt (Fig. 1) eine zum Einsetzen in entsprechende Nuten vorgesehene Dichtung 24 mit zwei angeformten Klemmelementen 28, 30, die beim Einsetzen der Dichtung zusammengedrückt werden und die Dichtung in den Nuten fixieren. Eine weitere Dichtung 46 ist umlaufend ausgebildet und sitzt zwischen separaten Elementen der Gasturbine.

In der Druckschrift EP-A2-1 378 689 schliesslich wird explizit erwähnt (Absätze [0006] und [0008]), dass die flächige Anlage des Bodens der Ausgleichskörper (11) am Nutgrund abrasive Effekte reduziert und so die Lebensdauer dieser Art von Spaltdichtung (mit einem zentralen Dichtkörper 16 und seitlichen Ausgleichskörpern 11) erhöht wird. Hierzu sind jedoch spezielle Ausgleichskörper notwendig.

### DARSTELLUNG DER ERFINDUNG

Es ist Aufgabe der Erfindung, eine Segmentabdichtung für eine Gasturbine anzugeben, welche die Nachteile bekannter Dichtungen vermeidet und sich insbesondere dadurch auszeichnet, dass auf einfache Weise ein Durchstossen der Wand der Dichtungsnut durch die vibrierende Streifendichtung vermieden oder zumindest stark hinausgezögert wird.

Die Aufgabe wird durch die Gesamtheit der Merkmale des Anspruchs 1 gelöst. Wesentlich für die Erfindung ist die deutliche Vergrösserung der Reibungsfläche zwischen der Wand und den Dichtungsstreifen gegenüber der Stirnfläche des Dichtungsstreifens. Hierdurch wird erreicht, dass der materialabtragende Effekt der Reibung verringert wird und ein Durchstossen der Stirnwand der

Dichtungsnuten durch den sich in der Nut hin und her bewegenden Dichtungsstreifen verhindert oder zumindest erheblich hinausgezögert wird.

Eine Ausgestaltung der Erfindung zeichnet sich dadurch aus, dass die Dichtungsstreifen an ihrem der Wand zugewandten Ende einen abgewinkelten Endabschnitt aufweisen, dessen Aussenseite die Kontaktfläche mit der Wand bildet. Durch den abgewinkelten Abschnitt wird auf besonders einfache Weise eine erheblich grössere Kontaktfläche für die reibende Berührung des Dichtungsstreifens mit der Wand bereitgestellt.

Eine Weiterbildung dieser Ausgestaltung ist dadurch gekennzeichnet, dass an den Enden der Dichtungsnuten abgewinkelte Nutfortsätze vorgesehen sind, in welche die Dichtungsstreifen mit ihren abgewinkelten Endabschnitten eingreifen.

Die Nutfortsätze können dabei rechtwinklig abgewinkelt sein. Sie können aber auch um einen Winkel von 90°± δ abgewinkelt sind, wobei 0 < δ ≤ 20° gilt.

Eine vereinfachte Herstellung dieser Nutkonfiguration ist dadurch gekennzeichnet, dass die Nutfortsätze als die Dichtungsnuten kreuzende Nutabschnitte ausgebildet sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt den Längsschnitt durch eine Gasturbine nach dem Stand der Technik mit einem den Heissgaskanal konzentrisch umgebenden, segmentierten Hitzeschild zur Abschirmung des Stators;
- Fig. 2: in einer Ansicht in Umfangsrichtung einen vergrösserten Ausschnitt der Stirnfläche eines Hitzeschild-Segments aus Fig. 1;
- Fig. 3: den Fig. 2 entsprechenden Ausschnitt der Stirnfläche eines Hitzeschildes gemäss einem Ausführungsbeispiel der Erfindung;
- Fig. 4: im Längsschnitt den Endbereich der Dichtungsnut aus Fig. 2 mit dem darin angeordneten Dichtungsstreifen;
- Fig. 5: in einer zu Fig. 4 vergleichbaren Darstellung den Endbereich der Dichtungsnut mit einliegendem Dichtungsstreifen gemäss Fig. 3; und
- Fig. 6: in einer zu Fig. 5 vergleichbaren Darstellung den Endbereich einer Dichtungsnut mit einliegendem Dichtungsstreifen gemäss einem anderen Ausführungsbeispiel der Erfindung.

### WEGE ZUR AUSFÜHRUNG DER ERFINDUNG

In Fig. 5 und 6 sind Ausführungsbeispiele der erfindungsgemässen Dichtung wiedergegeben, aus denen der wesentliche Punkt der technischen Lösung hervorgeht: In der nach wie vor am Ende geschlossenen Dichtungsnut 19 bzw. 27 liegt ein Dichtungsstreifen 23 bzw. 29, der an seinem Ende einen gegenüber der Längsrichtung des Dichtungsstreifens abgewinkelten Endabschnitt 24 bzw. 30 aufweist. Die Aussenseite des abgewinkelten Endabschnitts 24, 30 bildet gegenüber der Stirnwand 21 (Fig. 4) eine stark vergrösserte Kontaktfläche 26 bzw. 32, die beim reibenden Vibrieren (Doppelpfeile in Fig. 5, 6, welche die prinzipielle Vibrationsrichtung darstellen) des Dichtungsstreifens 23, 29 mit der Wand 25, 31 der Dichtungsnut 19, 27 in Berührung kommt. Durch die vergrösserte Kontaktfläche 26 bzw. 32 wird die vom Dichtungsstreifen 23, 29 auf die Nutwand ausgeübte Kraft auf eine grössere Fläche verteilt. Durch die Verteilung der Kraft auf eine grössere Fläche werden der Kontaktdruck und die Reibspannung reduziert. Mit einer Reduzierung der Spannung wird der durch Reibung erzeugte Schaden an der Wand drastisch reduziert, wenn nicht sogar ganz beseitigt, so dass die Wahrscheinlichkeit eines Durchreibens der Wand stark reduziert ist.

Wenn die Dichtungsnut 19, 27 ausreichend breit ist, kann der abgewinkelte Endabschnitt 24, 30 eingeführt werden, ohne dass die Nutgeometrie geändert werden muss. Um grössere Kontaktflächen zu ermöglichen, ist es von Vorteil, an den Enden der Dichtungsnuten 19, 27 abgewinkelte Nutfortsätze 28, 33 vorzusehen, die den abgewinkelten Endabschnitt 24, 30 des Dichtungsstreifens 23, 29 aufnehmen. Beim Ausführungsbeispiel der Fig. 3 bzw. Fig. 5 ist der Nutfortsatz 28 rechtwinklig abgebogen.

Im Ausführungsbeispiel der Fig. 6 schliesst der Nutfortsatz 33 mit der Längsrichtung der Dichtungsnut 27 einen von 90° abweichenden Winkel ein. Dies kann von Vorteil sein, wenn bei der Konfiguration der Nute auf geometrische Beschränkungen Rücksicht genommen werden muss. Es hat sich dabei ein Winkel bewährt, der im Bereich von 90°± δ liegt, wobei 0 < δ ≤ 20° gilt.

Gemäss Fig. 6 kann es aus herstellungstechnischen Gründen (z.B. Vereinfachung) von Vorteil sein, den Nutfortsatz 33 als kurze, die Dichtungsnut 27 kreuzenden Nute auszubilden.

### BEZUGSZEICHENLISTE

- 10: Gasturbine
- 11: Stator, insbesondere Trägerstruktur
- 12: Heissgaskanal
- 13: Laufschaufel
- 14: Leitschaufel
- 15,15',15": Hitzeschild (segmentiert)
- 16,16',16",17: Dichtung (Streifen- oder Federdichtung)
- 18,19,27: Dichtungsnut
- 20,23,29: Dichtungsstreifen
- 21: Stirnwand (Dichtungsnut)
- 22: Stirnfläche (Dichtungsstreifen)
- 24,30: Endabschnitt (abgewinkelt)
- 25,31: Wand (Nutfortsatz)
- 26,32: Kontaktfläche (Endabschnitt)
- 28,33: Nutfortsatz

## Patentansprüche

1. Gasturbine (10) mit einem Stator (11), der einen Heissgaskanal (12) konzentrisch umschliesst, und durch einen ringförmigen Hitzeschild (15', 15") gegenüber dem Heissgaskanal (12) abgeschirmt ist, welcher Hitzeschild (15', 15") aus einer Vielzahl von in Umfangsrichtung hintereinander angeordneten Segmenten zusammengesetzt ist, welche jeweils unter Bildung eines Spaltes in Umfangsrichtung aneinanderstossen, wobei zur Abdichtung der Spalte zwischen den aneinanderstossenden Segmenten Dichtungen (16', 16") angeordnet sind, welche dünne, längliche Dichtungsstreifen (23, 29) umfassen, die derart lose in zueinander korrespondierenden Dichtungsnuten (19, 27) in den gegenüberliegenden Stirnseiten der aneinanderstossenden Segmente des Hitzeschildes (15', 15") untergebracht sind undmit ihren Enden einer Wand (25, 31) der Dichtungsnuten (19, 27) gegenüberliegen, dass sie aus den Nuten in den Heissgaskanal (12) austreten würden, wenn die Wand (25, 31) durchgerieben würde, **dadurch gekennzeichnet, dass** zur Vermeidung des reibungsbedingten Durchstossens der Wand (25, 31) durch den in der Dichtungsnut (19, 27) liegenden Dichtungsstreifen (23, 29) die Reibungsfläche zwischen der Wand (25, 31) und den Dichtungsstreifen (23, 29) gegenüber der Stirnfläche (22) des Dichtungsstreifens (23, 29) deutlich vergrössert ist.

2. Gasturbine nach Anspruch 1, **dadurch gekennzeichnet, dass** die Dichtungsstreifen (23, 29) an ihrem der Wand (25, 31) zugewandten Ende einen abgewinkelten Endabschnitt (24, 30) aufweisen, dessen Aussenseite die Kontaktfläche (26, 32) mit der Wand (25, 31) bildet.

3. Gasturbine nach Anspruch 2, **dadurch gekennzeichnet, dass** an den Enden der Dichtungsnuten (19, 27) abgewinkelte Nutfortsätze (28, 33) vorgesehen sind, in welche die Dichtungsstreifen (23, 29) mit ihren abgewinkelten Endabschnitten (24, 30) eingreifen.

4. Gasturbine nach Anspruch 3 **dadurch gekennzeichnet, dass** die Nutfortsätze (28) rechtwinklig abgewinkelt sind.

5. Gasturbine nach Anspruch 3 **dadurch gekennzeichnet, dass** die Nutfortsätze (28) um einen Winkel von 90° ± 6 abgewinkelt sind, wobei 0 < δ ≤ 20° gilt.

6. Gasturbine nach Anspruch 3 **dadurch gekennzeichnet, dass** die Nutfortsätze (33) als die Dichtungsnuten (27) kreuzende Nutabschnitte ausgebildet sind.

## Claims

1. Gas turbine (10) with a stator (11) which concentrically surrounds a hot gas duct (12) and is shielded with respect to the hot gas duct (12) by means of an annular heat shield (15', 15"), which heat shield (15', 15") is composed of a multiplicity of segments which are arranged one behind the other in a circumferential direction and which in each case butt against one another in the circumferential direction so as to form a gap, seals (16', 16") being arranged for sealing off the gaps between the segments butting against one another, said seals comprising thin elongate sealing strips (23, 29) which are accommodated loosely in mutually corresponding sealing slots (19, 27) in the mutually opposite end faces of the segments, butting against one another, of the heat shield (15', 15"), and with their ends lie opposite a wall (25, 31) of the sealing slots (19, 27), in such a way that they would emerge from the slots into the hot gas duct (12) if the wall (25, 31) were rubbed through, **characterized in that**, to avoid the frictionally induced piercing of the wall (25, 31) by the sealing strip (23, 29) lying in the sealing slot (19, 27), the frictional surface between the wall (25, 31) and the sealing strips (23, 29) is markedly enlarged with respect to the end face (22) of the sealing strip (23, 29).

2. Gas turbine according to Claim 1, **characterized in that** the sealing strips (23, 29) have, at their end facing the wall (25, 31), an angled end portion (24, 30), the outside of which forms the contact surface (26, 32) with the wall (25, 31).

3. Gas turbine according to Claim 2, **characterized in that**, at the ends of the sealing slots (19, 27), angled slot extensions (28, 33) are provided, into which the sealing strips (23, 29) engage with their angled end portions (24, 30).

4. Gas turbine according to Claim 3, **characterized in that** the slot extensions (28) are angled at right angles.

5. Gas turbine according to Claim 3, **characterized in that** the slot extensions (28) are angled at an angle of 90° ± δ, 0 < δ ≤ 20° being applicable.

6. Gas turbine according to Claim 3, **characterized in that** the slot extensions (33) are designed as slot portions intersecting the sealing slots (27).

## Revendications

1. Turbine à gaz (10) comprenant un stator (11) qui entoure concentriquement un canal de gaz chaud (12) et qui est protégé vis-à-vis du canal de gaz chaud (12) par un écran thermique annulaire (15', 15"), lequel écran thermique (15', 15") est constitué d'une pluralité de segments disposés les uns derrière les autres dans la direction périphérique, qui sont en butée les uns contre les autres dans la direction périphérique en formant à chaque fois une fente, des joints d'étanchéité (16', 16") étant disposés, pour réaliser l'étanchéité des fentes, entre les segments en butée les uns contre les autres, lesquels joints d'étanchéité comprennent de minces bandes d'étanchéité allongées (23, 29) qui sont montées lâchement dans des rainures d'étanchéité (19, 27) correspondant les unes aux autres dans les côtés frontaux opposés des segments en butée les uns contre les autres de l'écran thermique (15', 15") et qui sont opposées par leurs extrémités à une paroi (25, 31) des rainures d'étanchéité (19, 27), de telle sorte qu'elles sortent des rainures dans le canal de gaz chaud (12) lorsque la paroi (25, 31) est fortement usée, **caractérisée en ce que** pour éviter le perçage de la paroi (25, 31) dû à l'usure par la bande d'étanchéité (23, 29) située dans la rainure d'étanchéité (19, 27), la surface d'usure entre la paroi (25, 31) et les bandes d'étanchéité (23, 29) est nettement agrandie par rapport à la surface frontale (22) de la bande d'étanchéité (23, 29).

2. Turbine à gaz selon la revendication 1, **caractérisée en ce que** les bandes d'étanchéité (23, 29) présentent, au niveau de leur extrémité tournée vers la paroi (25, 31), une portion d'extrémité coudée (24, 30) dont le côté extérieur forme la surface de contact (26, 32) avec la paroi (25, 31).

3. Turbine à gaz selon la revendication 2, **caractérisée en ce qu'**aux extrémités des rainures d'étanchéité (19, 27) sont prévues des saillies de rainure coudées (28, 33), dans lesquelles les bandes d'étanchéité (23, 29) viennent en prise avec leurs portions d'extrémité coudées (24, 30).

4. Turbine à gaz selon la revendication 3, **caractérisée en ce que** les saillies de rainure (28) sont coudées à angle droit.

5. Turbine à gaz selon la revendication 3, **caractérisée en ce que** les saillies de rainure (28) sont coudées suivant un angle de 90° ± δ, avec 0 < δ ≤ 20°.

6. Turbine à gaz selon la revendication 3, **caractérisée en ce que** les saillies de rainure (33) sont réalisées sous forme de portions de rainure croisant les rainures d'étanchéité (27).
